# DEMANDE DE BREVET EUROPEEN

(11) **EP 4 835 715 A1**
(43) Date de publication de la demande: **04.11.2026**
(21) Numéro de dépôt: 26175517.7
(22) Date de dépôt: 29.04.2026
(51) Int. Cl.: G06F 21/64

(54) **DISPOSITIF ÉLECTRONIQUE ET PROCÉDÉ DE VÉRIFICATION D'UN ENSEMBLE DE FICHIER(S) INFORMATIQUE(S) AVIONIQUE(S) DESTINÉ À ÊTRE TRANSMIS À AU MOINS UN SYSTÈME AVIONIQUE, INSTALLATION ET PROGRAMME D ORDINATEUR ASSOCIÉS**

(30) Priorité: 30.04.2025 FR 2504594
(71) Demandeur: THALES, 92190 Meudon (FR)
(72) Inventeur: VITTOZ, Fabien, 31036 TOULOUSE (FR); KUNTZ, Fabien, 31036 TOULOUSE CEDEX 1 (FR); CHACORNAC, Loïc, 31036 TOULOUSE CEDEX 1 (FR); PERNOT, Alexis, 31036 TOULOUSE CEDEX 1 (FR)
(74) Mandataire: Lavoix

(57) **Abrégé**

L'invention concerne un dispositif électronique de vérification (14) d'un ensemble (16) de fichier(s) informatique(s) avionique(s) à transmettre à au moins un système avionique (18) et à recevoir depuis au moins un appareil électronique (12), le dispositif comprenant :
- un module de vérification (64) configuré pour obtenir ledit ensemble, vérifier au moins une signature par fichier de l'ensemble et générer un message d'alerte en cas de non-vérification de signature d'au moins une partie dudit ensemble,
- un module de stockage (66) configuré pour stocker au moins une portion dudit ensemble si la vérification de signature de ladite au moins une portion a été effectuée avec succès, et
- un module de transmission (68) configuré pour transmettre, vers l'au moins un système avionique, ladite au moins une portion si la vérification de signature de ladite au moins une portion a été effectuée avec succès.

## Description

La présente invention concerne un dispositif électronique de vérification d'un ensemble de fichiers informatiques avioniques destinés à être transmis à au moins un système avionique embarqué à bord d'un aéronef, les fichiers étant aptes à être reçus depuis au moins un appareil électronique, le dispositif de vérification étant distinct de l'au moins un appareil électronique et configuré pour être connecté à l'au moins un appareil électronique, le dispositif de vérification et l'au moins un appareil électronique étant externes à l'aéronef.

La présente invention concerne également une installation comprenant un dispositif électronique de vérification du type précité, un procédé de vérification utilisant un dispositif électronique de vérification du type précité et un programme d'ordinateur comportant des instructions logicielles qui, lorsqu'elles sont exécutées par un ordinateur, mettent en œuvre un tel procédé.

L'invention concerne le domaine de la cyber-sécurité en aéronautique, et en particulier de la transmission de manière sécurisée de fichiers informatiques avioniques à un ou plusieurs systèmes avioniques embarqués à bord d'un aéronef.

En effet, il est régulièrement nécessaire d'importer des fichiers informatiques sur des systèmes avioniques embarqués sur des aéronefs. En particulier, des fichiers de maintenance doivent régulièrement être téléchargés sur de tels systèmes avioniques.

Afin de transmettre des fichiers de maintenance à un aéronef, il est connu d'utiliser des terminaux d'accès portable destinés à la maintenance, ou PMAT (de l'anglais : *Portable Maintenance Access Terminal*)*.* Ce sont généralement des ordinateurs portables appartenant à la compagnie aérienne.

Les fichiers de maintenance sont par exemple des progiciels téléchargeables sur site, également appelés fichiers FLS (de l'anglais *Field Loadable Software*).

Usuellement, un opérateur de maintenance doit graver sur un CD-ROM les fichiers FLS depuis le centre des opérations de maintenance, puis télécharger ces fichiers sur le PMAT par l'intermédiaire du CD-ROM.

Ensuite, une première possibilité est de connecter un câble entre le PMAT et une prise maintenance de l'aéronef, puis d'utiliser un logiciel préinstallé sur le PMAT pour faire une mise à jour selon le standard ARINC 615A.

Une deuxième possibilité est de connecter un lecteur de carte Compact Flash sur le PMAT, d'utiliser le même logiciel préinstallé sur le PMAT qui va alors transférer les fichiers FLS sur une carte Compact Flash, puis d'insérer la carte Compact Flash dans un système avionique à mettre à jour.

Dans les deux cas, le PMAT peut être compromis par un attaquant qui remplacerait le logiciel de maintenance du PMAT par une version malveillante, ou installerait un logiciel malveillant sur le PMAT. L'évènement redouté est l'altération des fichiers FLS, avec un impact sur l'intégrité des fichiers FLS pouvant potentiellement mettre en cause la sécurité de l'aéronef.

Pour pallier à cette vulnérabilité, le PMAT est généralement coupé du réseau et isolé dans un lieu sécurisé, ce qui empêche souvent la mise à jour du système informatique du PMAT et du logiciel préinstallé.

Une solution récemment utilisée est la consolidation de la cyber sécurité du PMAT via un durcissement d'un système d'exploitation, ou OS (de l'anglais *Operating System*), équipant le PMAT, et une vérification d'intégrité et d'authenticité de l'OS et d'applications logicielles installées sur le PMAT.

Toutefois, ces méthodes ne donnent pas entièrement satisfaction.

Un but de l'invention est alors de proposer un dispositif électronique de vérification de fichiers informatiques simple d'utilisation, proposant une sécurisation cyber forte des fichiers transmis à l'aéronef et compatible avec un équipement de type PMAT externe.

A cet effet, l'invention a pour objet un dispositif électronique de vérification d'un ensemble de fichiers informatiques avioniques destinés à être transmis à au moins un système avionique embarqué à bord d'un aéronef, les fichiers étant aptes à être reçus depuis au moins un appareil électronique, le dispositif de vérification étant distinct de l'au moins un appareil électronique et configuré pour être connecté à l'au moins un appareil électronique, le dispositif de vérification et l'au moins un appareil électronique étant externes à l'aéronef, le dispositif de vérification comprenant :
- un module de vérification configuré pour obtenir l'ensemble de fichier(s) informatique(s) avionique(s) depuis l'au moins un appareil électronique, pour vérifier au moins une signature par fichier informatique avionique de l'ensemble et pour générer un message d'alerte en cas de non-vérification de signature d'au moins une partie de l'ensemble de fichier(s) informatique(s) avionique(s),
- un module de stockage configuré pour stocker, dans une mémoire de stockage du dispositif de vérification, au moins une portion de l'ensemble de fichier(s) informatique(s) avionique(s) si la vérification de signature de ladite au moins une portion de l'ensemble de fichier(s) informatique(s) avionique(s) a été effectuée avec succès, et
- un module de transmission configuré pour transmettre, vers l'au moins un système avionique, ladite au moins une portion de l'ensemble de fichier(s) informatique(s) avionique(s) si la vérification de signature de ladite au moins une portion de l'ensemble de fichier(s) informatique(s) avionique(s) a été effectuée avec succès.

Grâce au module de vérification et à la distinction entre le dispositif électronique de vérification et l'au moins un appareil électronique, une éventuelle compromission de l'au moins un appareil électronique ne se répercutera pas sur le dispositif de vérification et/ou sur l'au moins un système avionique. Cela permet de lever les mesures organisationnelles prises selon l'état de la technique pour sécuriser l'appareil électronique, par exemple l'exigence interdisant la connexion du PMAT au réseau Ethernet, qui n'est pas toujours rigoureusement appliquée. Le dispositif électronique de vérification selon l'invention permet notamment d'autoriser une connexion de l'appareil électronique à un réseau sans fil, tout en assurant la cyber-sécurité de l'au moins un système avionique.

Suivant d'autres aspects avantageux de l'invention, le dispositif de vérification comprend une ou plusieurs des caractéristiques suivantes, prises isolément ou suivant toutes les combinaisons techniquement possibles :
- les modules de vérification, de stockage et de transmission sont inclus dans une enclave sécurisée au sein du dispositif de vérification ;
- le dispositif électronique de vérification comprend en outre un module de filtrage configuré pour filtrer des données reçues de l'au moins un appareil électronique ;
- le module de vérification est configuré pour vérifier la signature de l'ensemble de fichier(s) informatique(s) avionique(s) via un algorithme de cryptographie asymétrique ;
- le dispositif de vérification comporte un lecteur de support informatique et un boitier de protection à l'intérieur duquel sont disposés les modules de vérification, de stockage et de transmission, le lecteur étant amovible par rapport au boitier de protection ;
le lecteur étant de préférence un lecteur de support de type Compact Flash ;
- le dispositif de vérification comporte un processeur de type différent d'un processeur équipant l'au moins un appareil électronique, le type de processeur étant choisi parmi le groupe comprenant : x86, ARM^{®}, PowerPC ; et
- le dispositif de vérification comporte un système logiciel d'exploitation de type différent d'un système logiciel d'exploitation équipant l'au moins un appareil électronique, le type de système logiciel d'exploitation étant choisi parmi le groupe comprenant : Windows, Linux ou MacOS.

L'invention concerne également une installation de transmission d'un ensemble de fichier(s) informatique(s) avionique(s) à au moins un système avionique embarqué à bord d'un aéronef, l'installation de transmission comprenant au moins un appareil électronique et un dispositif électronique de vérification connecté à l'au moins un appareil électronique, le dispositif de vérification étant tel que défini ci-dessus.

Suivant un autre aspect avantageux de l'invention, l'installation de transmission comprend la caractéristique suivante :
- le ou chaque appareil électronique est un terminal portable destiné à l'aide à la maintenance.

L'invention concerne également un procédé de vérification d'un ensemble de fichier(s) informatique(s) avionique(s) transmis par au moins un appareil électronique vers au moins un système avionique embarqué à bord d'un aéronef comprenant les étapes suivantes :
- acquisition de l'ensemble de fichier(s) informatique(s) avionique(s),
- vérification de signature de l'ensemble de fichier(s) informatique(s) avionique(s),
- en cas d'échec de la vérification de signature d'au moins une partie de l'ensemble de fichier(s) informatique(s) avionique(s), génération d'un message d'alerte, et
- en cas de succès de la vérification de signature d'au moins une portion de l'ensemble de fichier(s) informatique(s) avionique(s), stockage de ladite au moins une portion de l'ensemble de fichier(s) informatique(s) avionique(s) ; puis transmission de ladite au moins une portion de l'ensemble de fichier(s) informatique(s) avionique(s) vers un ou plusieurs systèmes avioniques embarqués à bord d'un aéronef.

L'invention a également pour objet un programme d'ordinateur, comportant des instructions logicielles qui, lorsqu'elles sont exécutées par un ordinateur, mettent en œuvre un procédé de vérification tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig. 1] la figure 1 est une représentation schématique d'une installation, selon l'invention, de transmission de fichiers informatiques avioniques à au moins un système avionique embarqué à bord d'un aéronef, l'installation de transmission comprenant au moins un appareil électronique et un dispositif électronique de vérification connecté à l'au moins un appareil électronique ; et
[Fig. 2] la figure 2 est un organigramme d'un procédé, selon l'invention, de vérification de fichiers informatiques par le dispositif de vérification de la figure 1.

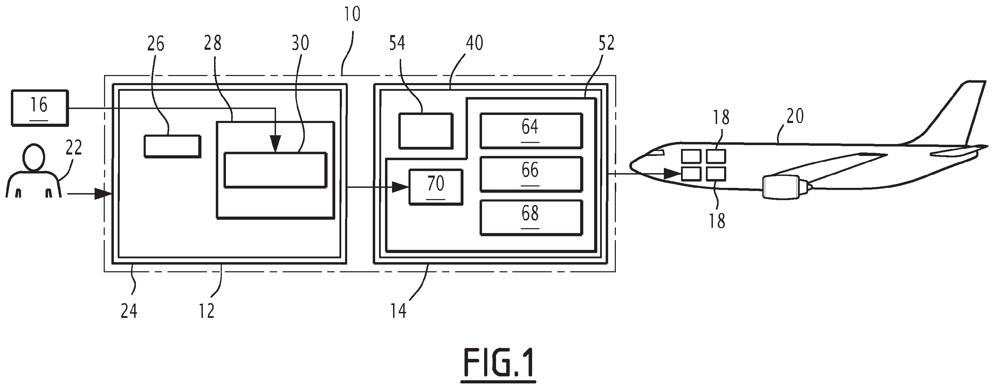

Sur la figure 1, une installation de transmission 10 comprend un appareil électronique 12 et un dispositif électronique de vérification 14 configuré pour recevoir un ensemble 16 de fichiers informatiques transmis par l'appareil électronique 12. Le dispositif électronique de vérification 14 est également configuré pour transmettre l'ensemble 16 de fichiers informatiques à un ou plusieurs systèmes avioniques embarqués 18 à bord d'un aéronef 20.

Le dispositif électronique de vérification 14 est distinct de l'appareil électronique 12 et est connecté à l'appareil électronique 12. Le dispositif électronique de vérification 14 et l'appareil électronique 12 forment deux équipements électroniques matériellement distincts.

L'appareil électronique 12 est configuré pour être pilotable par un opérateur de maintenance 22.

L'appareil électronique 12 est par exemple un ordinateur portable, appartenant par exemple à une compagnie aérienne et comporte en outre un port Ethernet et un port USB-C. Eventuellement, l'appareil électronique 12 comporte également un lecteur de CD-ROM et un port USB.

L'appareil électronique 12 comprend une première unité de traitement d'informations 24 comprenant une première mémoire 26 et un premier processeur 28 associé à la première mémoire 26. Il comprend en outre un système d'exploitation qui est par exemple un environnement Windows^{®} ou MacOS^{®}. Par exemple, le premier processeur 28 présente une architecture x86-64bits avec Windows^{®}.

Le système d'exploitation comporte un module 30 donnant accès à un espace utilisateur stocké dans la première mémoire 26 et un contrôleur d'entrée et sortie.

L'espace utilisateur comporte en outre un navigateur ayant accès à des données externes, en particulier, par un accès internet sans fil ou par un accès filaire à un réseau interne. Dans le mode de réalisation préféré, le navigateur comporte un accès internet sans fil.

Le navigateur permet l'installation de logiciels de mise à jour des applications présentes dans le système d'exploitation et de logiciels de mise à jour du système d'exploitation.

Le navigateur permet également l'installation d'un ensemble 16 de fichiers informatiques destinés à être transmis à un ou plusieurs systèmes avioniques embarqués 18.

L'accès au navigateur est une fonctionnalité du module 30 donnant accès à l'espace utilisateur.

L'ensemble 16 de fichier(s) informatique(s) est avantageusement un ensemble de fichier(s) de maintenance, et par exemple un ou des fichiers FLS.

En variante ou en complément, le ou un des fichier(s) informatique(s) est un logiciel ou une partie de logiciel.

En variante ou en complément, le ou un des fichier(s) informatique(s) est une base de données.

L'ensemble 16 comprend un ou plusieurs fichiers informatiques.

Le dispositif de vérification 14 comprend une seconde unité de traitement d'informations 40. La seconde unité de traitement d'informations 40 est typiquement composée d'une seconde mémoire 52 et d'un second processeur 54 associé à la seconde mémoire 52.

Le dispositif de vérification 14 comprend également par exemple un lecteur de support de type Compact Flash, un contrôleur d'entrée et sortie, un port Ethernet et un port USB-C.

Le second processeur 54 est d'un type différent du premier processeur 28 et est muni d'un système d'exploitation différent du système d'exploitation du premier processeur 28.

Le second processeur 54 est par exemple un processeur ARM^{®} ou PowerPC^{®} avec un système d'exploitation intégré type Linux^{®}.

Le dispositif de vérification 14 comprend un module 64 de vérification d'au moins un fichier informatique à destination d'un système avionique 20, un module 66 de stockage de chaque fichier informatique acquis respectif, et un module 68 de transmission à destination du système avionique 20 correspondant, de chaque fichier informatique validé par le module de vérification 64 et stocké par le module de stockage 66, le module de transmission 68 étant connecté en sortie du module de stockage 66, lui-même étant connecté en sortie du module de vérification 64.

Le module de vérification 64 est apte à recevoir l'ensemble 16 de fichiers informatiques et à effectuer une vérification de signature des fichiers informatiques avioniques.

La vérification de signature est destinée à vérifier l'intégrité, l'authenticité et/ou la non-répudiation des fichiers informatiques avioniques.

Par authenticité d'un fichier informatique, on entend le fait que le fichier informatique a été émis par un producteur certifié de fichiers informatiques.

Par intégrité d'un fichier informatique, on entend le fait que les informations portées par le fichier informatique n'ont pas été, en partie ou en totalité, modifiées, altérées, supprimées après sa création, ni qu'aucune information supplémentaire ne lui a été ajoutée après sa création.

Par non-répudiation d'un fichier informatique, on entend l'assurance qu'une action sur le fichier informatique réalisée au nom d'un fournisseur du fichier informatique, après authentification, ne saurait être répudiée par ce dernier.

En complément facultatif, le module de vérification 64, le module de stockage 66 et le module de transmission 68 sont inclus dans une enclave sécurisée.

L'enclave sécurisée 50 est par exemple une enclave matérielle, ce qui signifie que le module de vérification 64, le module de stockage 66 et le module de transmission 68 sont exécutés sur des ressources matérielles dédiées, i.e. un processeur isolé par exemple.

Dans ce cas, l'enclave sécurisée 50 est par exemple un environnement d'exécution sécurisée, ou TEE (de l'anglais *Trusted Execution Environment*). L'enclave client sécurisée est par exemple choisie parmi le groupe consistant en : une enclave ARM^{®} TrustZone^{®} et une enclave Intel^{®} Software Guard Extensions, également appelée Intel^{®} SGX.

En variante, l'enclave sécurisée 50 est une enclave logique, ce qui signifie que le dispositif de vérification 14 possède des mécanismes logiciels pour que d'autres applications logicielles du dispositif de vérification 14 n'accèdent pas au module de vérification 64, au module de stockage 66, ni au module de transmission 68.

Par exemple, le second processeur 54 présente des fenêtres temporelles pendant lesquelles il dédie exclusivement ses ressources au module de vérification 64, au module de stockage 66 et au module de transmission 68.

La réception de l'ensemble 16 de fichiers informatiques est préférentiellement effectuée via une connexion filaire, par exemple une entrée USB-C connectée à l'appareil électronique 12.

Avantageusement, le dispositif de vérification 14 comporte en outre un module de filtrage 70 configuré pour filtrer l'accès au dispositif de vérification 14 par l'appareil électronique 12.

Le module de filtrage 70 est par exemple connecté en sortie de l'entrée USB-C, et le module de vérification 64 est connecté en sortie du module de filtrage 70.

Avantageusement, le module de filtrage 70 comporte plusieurs éléments permettant de protéger l'accès au dispositif de vérification 14 : un pare-feu, un filtrage syntaxique et une rupture protocolaire par exemple.

Avantageusement, l'entrée USB-C permet d'assurer une alimentation électrique du dispositif de vérification 14.

Le module de vérification 64 est par exemple réalisé sous la forme d'une application de type Dataloader.

L'intégrité et l'authenticité de l'ensemble 16 de fichiers informatiques sont par exemple vérifiées via la mise en œuvre d'une fonction de vérification de signature.

Cette vérification de signature utilise par exemple un algorithme de cryptographie asymétrique. Une clé publique sera installée dans le boitier de maintenance et servira à l'application de vérification de signature. Une clé privée associée à la clé publique est stockée côté signataire.

L'algorithme de cryptographie asymétrique est par exemple un algorithme de type RSA. Lors de la création d'un fichier FLS, une empreinte avec l'algorithme SHA256 est calculée. La signature repose sur le calcul via l'algorithme de type RSA d'une clé de 4096 bits de cette empreinte. Le résultat est stocké avec le FLS, par exemple par compression sous format ZIP du fichier FLS et de la signature, et sera transmis au module de vérification 64. La vérification de signature dans le module de vérification 64 consiste à déchiffrer la signature avec la clé publique pour en extraire l'empreinte de confiance et la comparer avec l'empreinte du FLS calculée en parallèle.

En variante, l'algorithme de cryptographie utilise une méthode de cryptographie à courbe elliptique, de type ECDSA (de l'anglais *Elliptic Curve Digital Signature Algorithm*) par exemple.

En variante encore, la vérification de signature utilise le format ARINC 835.

Le module de transmission 68 est apte à communiquer avec un système avionique embarqué 18 selon, par exemple, le protocole ARINC 615A.

En variante ou en complément du protocole ARINC 615A, le protocole ARINC 615 est utilisé, par exemple si une connectique de type ARINC 429 est utilisée.

Le module de vérification 64, le module de stockage 66 et le module de transmission 66 sont, par exemple, réalisés chacun sous forme d'un logiciel, ou d'une brique logicielle, exécutable par le second processeur 54. La seconde mémoire 52 du dispositif de vérification 14 est alors apte à stocker un logiciel d'acquisition d'au moins un fichier informatique à destination d'un système avionique 20 ; un logiciel de vérification de chaque fichier informatique acquis respectif ; et un logiciel de transmission, à destination du système avionique 20 correspondant, de chaque fichier informatique validé par le logiciel de vérification et stocké par le logiciel de stockage. Le second processeur 54 du dispositif de vérification 14 est alors apte à exécuter chacun des logiciels parmi le logiciel d'acquisition, le logiciel de vérification et le logiciel de transmission.

L'aéronef 20 comprend des systèmes avioniques embarqués 18. L'aéronef 20 est préférentiellement un avion. En variante, l'aéronef 20 est un hélicoptère ou un drone pilotable à distance par un utilisateur.

Chaque système avionique embarqué 18 est par exemple choisi parmi le groupe comportant : un système de gestion du vol, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite GNSS (de l'anglais *Global Navigation Satellite System*), tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prevention System*) ; et un radioaltimètre, également noté RA (de l'anglais *RadioAltimeter*).

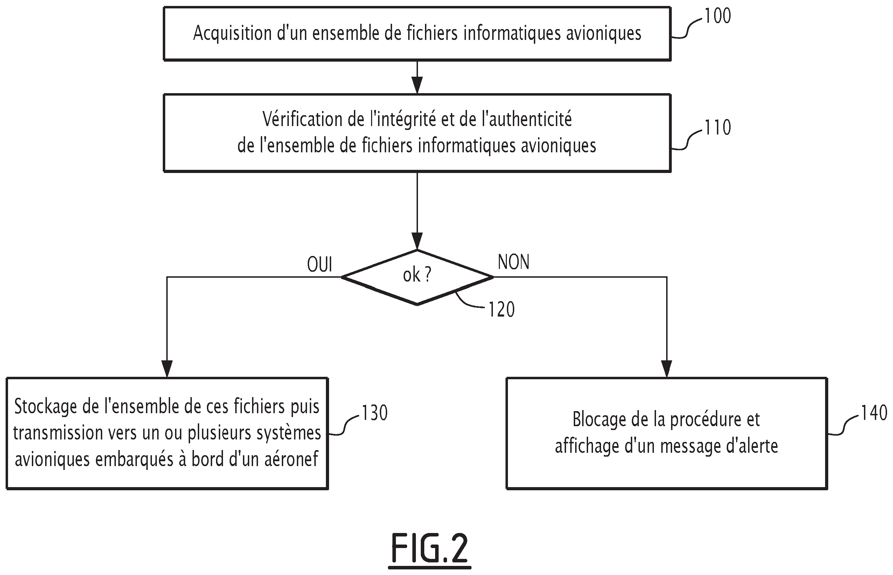

Le fonctionnement du dispositif de vérification 14 selon l'invention va être à présent décrit en regard de la figure 2 représentant un organigramme du procédé de vérification d'un ou plusieurs fichiers informatiques, ledit procédé de vérification étant mis en œuvre par le dispositif de vérification 14.

Une fois acquises par l'appareil électronique 12, l'ensemble 16 de fichiers informatiques est apte à être transmis au dispositif de vérification 14.

Au cours d'une étape d'acquisition 100, le dispositif de vérification 14 acquiert l'ensemble 16 de fichiers informatiques à partir de l'appareil électronique 12.

La transmission de l'ensemble 16 de fichiers informatiques au dispositif de vérification 14 se fait préférentiellement par câble USB-C.

L'étape 100 est mise en œuvre par le module de vérification 64.

Ensuite, au cours d'une étape de vérification 110, le module de vérification 64 procède à la vérification de l'ensemble 16 de fichiers informatiques.

Ensuite, au cours d'une étape de test 120, un résultat de test est déterminé par le module de vérification 64. Le résultat de test est positif (OUI) si, lors de l'étape de vérification 110, la vérification de l'ensemble 16 de fichier(s) informatique(s) est correcte. Le résultat de test est négatif (NON) si, lors de l'étape de vérification 110, la vérification d'au moins une partie de l'ensemble 16 de fichier(s) informatique(s) est incorrecte.

Au moins une partie d'un ensemble désigne une partie seulement de l'ensemble ou tout l'ensemble, i.e. tout ou partie de l'ensemble. De même, au moins une portion d'un ensemble désigne une portion seulement de l'ensemble ou tout l'ensemble, i.e. tout ou partie de l'ensemble.

Par la suite, les notions de partie et de portion sont équivalentes, et indiquent juste deux terminologies distinctes pour distinguer la part des fichiers chacun authentique et intègre de celle des fichiers chacun non authentique et/ou non intègre.

Par exemple, la vérification d'au moins une partie de l'ensemble 16 de fichier(s) informatique(s) est incorrecte tandis que la vérification d'au moins une portion de l'ensemble 16 de fichier(s) informatique(s) est correcte.

Selon une première variante, la vérification de l'ensemble 16 de fichier(s) informatique(s) est effectuée séquentiellement pour le ou chaque fichier informatique, le ou chaque fichier informatique présentant par exemple une signature individuelle.

Selon une deuxième variante, la vérification de l'ensemble 16 de fichier(s) informatique(s) est effectuée d'un bloc pour l'ensemble 16 de fichier(s) informatique(s), l'ensemble 16 de fichier(s) informatique(s) présentant par exemple une signature unique.

Selon une troisième variante, la vérification de l'ensemble 16 de fichier(s) informatique(s) est effectuée, pour une première partie de l'ensemble 16 de fichier(s) informatique(s), séquentiellement pour le ou chaque fichier informatique, le ou chaque fichier informatique présentant par exemple une signature individuelle, puis est effectuée, pour une deuxième partie de l'ensemble 16 de fichier(s) informatique(s), par bloc(s) de fichiers informatiques, un bloc de fichiers informatiques présentant par exemple une signature unique.

Si le résultat de l'étape de test 120 est positif (OUI), l'ensemble 16 de fichier(s) informatique(s) est alors destiné à être stocké par le module de stockage 66 sur la seconde mémoire 52 lors d'une étape 130 de stockage et de transmission. Au cours de cette étape 130 de stockage et de transmission, l'ensemble 16 de fichier(s) informatique(s) est transmis par le module de transmission 68 au(x) système(s) avionique(s) embarqué(s) 18 de l'aéronef 20, pour lequel ou lesquels cet ensemble 16 est destiné.

Si le résultat de l'étape de test 120 est négatif (NON), c'est-à-dire que la vérification de l'authenticité ou de l'intégrité d'au moins une partie de l'ensemble 16 de fichier(s) informatique(s) est incorrecte, le procédé de vérification comporte une étape 140 de génération d'un message d'alerte qui sera remonté à l'opérateur 22.

Dans une variante, si l'ensemble 16 de fichier(s) informatique(s) comporte plusieurs fichiers informatiques indépendants les uns par rapport aux autres et que le résultat de l'étape de test 120 est négatif (NON) pour l'ensemble 16 de fichiers informatiques, mais que la vérification de l'authenticité ou de l'intégrité d'une portion de l'ensemble 16 de fichier(s) informatique(s) est correcte, l'étape de génération 140 comporte en outre une étape de stockage et de transmission de la portion de l'ensemble 16 de fichier(s) informatique(s) dont la vérification de l'authenticité ou de l'intégrité est correcte.

Avantageusement, le message d'alerte est configuré pour être transmis à un écran visible par l'opérateur 22 et pour être affiché par l'écran.

De préférence, l'étape de génération 140 comporte en outre la sauvegarde de l'au moins une partie de l'ensemble 16 de fichier(s) informatique(s) dont la vérification de l'intégrité ou de l'authenticité est incorrecte à des fins d'investigation ultérieure.

L'au moins un appareil électronique 12 est apte à être connecté à des réseaux extérieurs, il est donc vulnérable aux attaques et potentiellement compromis.

Cependant, la dissimilarité matérielle entre le premier processeur 28 de l'au moins un appareil électronique 12 et le second processeur 54 du dispositif de vérification 14 rend plus difficile une éventuelle compromission du dispositif de vérification 14 à partir de l'au moins un appareil électronique 12.

En effet, par exemple, un logiciel malveillant sur un système x86-64 ne s'exécutera pas sur un système ARM.

La dissimilarité logicielle entre les systèmes d'exploitation de l'au moins un appareil électronique 12 et du dispositif de vérification 14 rend également plus difficile une éventuelle compromission du dispositif de vérification 14 à partir de l'au moins un appareil électronique 12.

De plus, la surface d'attaque est réduite à une entrée du dispositif de vérification 14, USB-C par exemple, par laquelle le dispositif de vérification 14 est connecté à l'au moins appareil électronique 12, et celle-ci est protégée par le module de vérification 64 contenu l'enclave sécurisée 50.

La confiance est donc plus forte que sur un système unique potentiellement compromis dans lequel la vérification de signature aurait pu être contournée.

En outre, ce système de protection permet de lever les mesures organisationnelles habituellement mises en œuvre pour sécuriser l'au moins appareil électronique 12 qui est habituellement placé en coffre-fort par exemple.

Ce système de protection notamment autorise de connecter l'au moins appareil électronique 12 à un réseau sans fil. Cet au moins appareil électronique 12 est par exemple un ordinateur portable d'une compagnie aérienne et nécessite des mises à jour régulières de son système d'exploitation.

## Revendications

1. Dispositif électronique de vérification (14) d'un ensemble (16) de fichier(s) informatique(s) avionique(s) destinés à être transmis à au moins un système avionique (18) embarqué à bord d'un aéronef (20), le(s) fichier(s) (16) étant aptes à être reçus depuis au moins un appareil électronique (12), le dispositif de vérification (14) étant distinct de l'au moins un appareil électronique (12) et configuré pour être connecté à l'au moins un appareil électronique (12), le dispositif de vérification (14) et l'au moins un appareil électronique (12) étant externes à l'aéronef (20), le dispositif de vérification (14) comprenant :
- un module de vérification (64) configuré pour obtenir l'ensemble (16) de fichier(s) informatique(s) avionique(s) depuis l'au moins un appareil électronique (12), pour vérifier au moins une signature par fichier informatique avionique de l'ensemble (16) et pour générer un message d'alerte en cas de non-vérification de signature d'au moins une partie de l'ensemble (16) de fichier(s) informatique(s) avionique(s),
- un module de stockage (66) configuré pour stocker, dans une mémoire de stockage (52) du dispositif de vérification (14), au moins une portion de l'ensemble (16) de fichier(s) informatique(s) avionique(s) si la vérification de signature de ladite au moins une portion de l'ensemble (16) de fichier(s) informatique(s) avionique(s) a été effectuée avec succès, et
- un module de transmission (68) configuré pour transmettre, vers l'au moins un système avionique (18), ladite au moins une portion de l'ensemble (16) de fichier(s) informatique(s) avionique(s) si la vérification de signature de ladite au moins une portion de l'ensemble (16) de fichier(s) informatique(s) avionique(s) a été effectuée avec succès.

2. Dispositif (14) selon la revendication 1, dans lequel les modules de vérification (64), de stockage (66) et de transmission (68) sont inclus dans une enclave sécurisée au sein du dispositif de vérification (14).

3. Dispositif (14) selon la revendication 1 ou 2, dans lequel le dispositif électronique de vérification (14) comprend en outre un module de filtrage (70) configuré pour filtrer des données reçues de l'au moins un appareil électronique (12).

4. Dispositif (14) selon l'une quelconque des revendications précédentes, dans lequel le module de vérification (64) est configuré pour vérifier la signature de l'ensemble (16) de fichier(s) informatique(s) avionique(s) via un algorithme de cryptographie asymétrique.

5. Dispositif (14) selon l'une quelconque des revendications précédentes, dans lequel le dispositif de vérification (14) comporte un lecteur de support informatique et un boitier de protection à l'intérieur duquel sont disposés les modules de vérification (64), de stockage (66) et de transmission (68), le lecteur étant amovible par rapport au boitier de protection ;
le lecteur étant de préférence un lecteur de support de type Compact Flash.

6. Dispositif (14) selon l'une quelconque des revendications précédentes, dans lequel le dispositif de vérification (14) comporte un processeur (54) de type différent d'un processeur (26) équipant l'au moins un appareil électronique (12), le type de processeur étant choisi parmi le groupe comprenant : x86, ARM^{®}, PowerPC.

7. Dispositif (14) selon l'une quelconque des revendications précédentes dans lequel le dispositif de vérification (14) comporte un système logiciel d'exploitation de type différent d'un système logiciel d'exploitation équipant l'au moins un appareil électronique, le type de système logiciel d'exploitation étant choisi parmi le groupe comprenant : Windows, Linux ou MacOS.

8. Installation de transmission (10) d'un ensemble (16) de fichier(s) informatique(s) avionique(s) à au moins un système avionique (18) embarqué à bord d'un aéronef (20), l'installation de transmission (10) comprenant au moins un appareil électronique (12) et un dispositif électronique de vérification (14) connecté à l'au moins un appareil électronique (12), le dispositif de vérification (14) étant selon l'une quelconque des revendications précédentes.

9. Installation (10) selon la revendication 8, dans laquelle le ou chaque appareil électronique (12) est un terminal portable destiné à l'aide à la maintenance.

10. Procédé de vérification par un dispositif de vérification (14) d'un ensemble (16) de fichier(s) informatique(s) avionique(s) transmis par au moins un appareil électronique (14) vers au moins un système avionique (18) embarqué à bord d'un aéronef (20) comprenant les étapes suivantes :
- acquisition (100) de l'ensemble (16) de fichier(s) informatique(s) avionique(s),
- vérification (110) de signature de l'ensemble (16) de fichier(s) informatique(s) avionique(s),
- en cas d'échec de la vérification de signature d'au moins une partie de l'ensemble (16) de fichier(s) informatique(s) avionique(s), génération (140) d'un message d'alerte, et
- en cas de succès de la vérification de signature d'au moins une portion de l'ensemble (16) de fichier(s) informatique(s) avionique(s), stockage (130) de ladite au moins une portion de l'ensemble (16) de fichier(s) informatique(s) avionique(s) ; puis transmission (130) de ladite au moins une portion de l'ensemble (16) de fichier(s) informatique(s) avionique(s) vers un ou plusieurs systèmes avioniques (18) embarqués à bord d'un aéronef (20).

11. Programme d'ordinateur, comportant des instructions logicielles qui, lorsqu'elles sont exécutées par un ordinateur, mettent en œuvre un procédé selon la revendication précédente.
